# EUROPÄISCHE PATENTSCHRIFT

(11) **EP 3 437 478 B1**
(45) Veröffentlichungstag und Bekanntmachung des Hinweises auf die Patenterteilung: **13.05.2020**
(21) Anmeldenummer: 18180265.3
(22) Anmeldetag: 28.06.2018
(51) Int. Cl.: A21B 3/04, F24C 15/32

(54) **GARGERÄT UND VERFAHREN ZUM BETREIBEN EINES GARGERÄTS**
COOKING DEVICE AND METHOD FOR USING A COOKING DEVICE
APPAREIL DE CUISSON ET PROCÉDÉ D'UTILISATION D'UN APPAREIL DE CUISSON

(30) Priorität: 31.07.2017 DE 102017117237
(43) Veröffentlichungstag der Anmeldung: 06.02.2019
(73) Patentinhaber: Miele & Cie. KG, 33332 Gütersloh (DE)
(72) Erfinder: Sillmen, Ulrich, 33332 Gütersloh (DE)

(56) Entgegenhaltungen:
- WO-A1-2011/050746
- US-A- 5 463 940
- US-A1- 2011 271 847

## Beschreibung

Die vorliegende Erfindung betrifft ein Gargerät sowie ein Verfahren zum Betreiben eines Gargeräts mit wenigstens einem beheizbaren und durch wenigstens eine Garraumtür verschließbaren Garraum. Das Gargerät umfasst wenigstens eine mit dem Garraum strömungsverbundene Aufbereitungseinrichtung zum Trocknen von Luft aus dem Garraum.

Bei modernen Gargeräten werden immer häufiger ein möglichst emissionsarmer und oft sogar ein emissionsfreier Betrieb gewünscht. Dabei werden der beim Garvorgang entstehende Wrasen und besonders dessen Feuchtigkeit, Fett und geruchsintensive Stoffe als störende Emissionen empfunden. Für einen emissionsfreien Betrieb wird also gewünscht, dass diese Bestandteile nicht oder nur in vernachlässigbaren Mengen in die Umgebung des Gargeräts bzw. in den Küchenraum gelangen. Um Fett und Gerüche zu entfernen, werden daher oft Katalysatoren eingesetzt.

Allerdings entstehen bei Garvorgängen fast immer Feuchte-Emissionen, zum Beispiel durch den aus dem Gargut austretenden Wasserdampf. Zudem kann auch nicht einfach darauf verzichtet werden, die feuchte Luft bzw. den Wrasen aus dem Garraum zu entfernen. Ansonsten kommt es zu einer zu hohen Garraumfeuchte, was für viele Garprozesse und Zubereitungsarten oft von großem Nachteil ist. Beispielsweise muss bei der Zubereitung von Braten und knusprigen Teigwaren oder auch bei Grillvorgängen der feuchte Wrasen aus dem Garraum entfernt werden, um optimale Garergebnisse erzielen zu können.

Um die Feuchte im Garraum zu senken und zugleich auch die Feuchte-Emissionen des Gargeräts zu reduzieren, sind zum Beispiel Gargeräte bekannt geworden, welche die Luft im Garraum in einem Umluftkreislauf trocknen.

Aus der US 2011/0271847 A1 ist ein Gargerät bekannt, bei dem während eines Backprozesses eine trockene Niedrigtemperaturumgebung erzeugt werden kann. Dazu ist an den Backraum ein Trockenraum angeschlossen, aus welchem dem Backraum trockene, gekühlte Luft zugeführt werden kann.

Demgegenüber ist es die Aufgabe der vorliegenden Erfindung, eine verbesserte und insbesondere unaufwändige Möglichkeit zur Reduzierung der Feuchte-Emissionen eines Gargeräts zur Verfügung zu stellen.

Diese Aufgabe wird gelöst durch ein Gargerät mit den Merkmalen des Anspruchs 1 sowie durch ein Verfahren den Merkmalen des Anspruchs 11. Bevorzugte Merkmale sind Gegenstand der Unteransprüche. Weitere Vorteile und Merkmale ergeben sich aus der allgemeinen Beschreibung der Erfindung und der Beschreibung der Ausführungsbeispiele.

Das erfindungsgemäße Gargerät umfasst wenigstens einen beheizbaren und durch wenigstens eine Garraumtür verschließbaren Garraum. Das Gargerät umfasst wenigstens eine mit dem Garraum strömungsverbundene Aufbereitungseinrichtung zum Trocknen von Luft aus dem Garraum. Dabei ist die Aufbereitungsseinsrichtung dazu geeignet und ausgebildet, wenigstens eine Charge Luft aus dem Garraum zu saugen und in wenigstens eine Trocknereinheit zu überführen und die Charge Luft mittels wenigstens einer Trocknereinheit zu trocknen und nach dem Trocknungsvorgang dem Garraum wieder zuzuführen.

Das erfindungsgemäße Gargerät bietet viele Vorteile. Einen erheblichen Vorteil bietet die chargenweise Lufttrocknung. Das ermöglicht eine besonders unaufwändige Lufttrocknung, da kein Umluftkreislauf notwendig ist. Durch die chargenweise Trocknung können andere Anforderungen an die Trocknereinheit gestellt werden, sodass diese zum Beispiel hinsichtlich Energieaufwand und Bauraum besonders gut optimiert werden kann. Besonders vorteilhaft ist zudem, dass im Gegensatz zu einem Umluftkreislauf keine ständigen Luftumwälzungen im Garraum stattfinden. Das ist für viele Zubereitungen und Garvorgänge von großem Vorteil. Die Erfindung ermöglicht somit eine verbesserte und unaufwändige Reduzierung der Feuchte-Emissionen während eines Garbetriebs.

Insbesondere wird die Charge Luft erst nach der Trocknung wieder dem Garraum zugeführt. Insbesondere verbleibt die Charge Luft während der Trocknung in der Trocknereinheit. Insbesondere ist kein Kreislauf vorgesehen, bei dem beispielsweise ständig Luft aus dem Garraum gesaugt und ständig wieder zurückgeführt wird. Insbesondere wird keine weitere Luft aus dem Garraum angesaugt, wenn eine Charge Luft in der Trocknereinheit aufgenommen ist bzw. getrocknet wird. Insbesondere wird keine Luft in den Garraum geführt, wenn eine Charge Luft in der Trocknereinheit aufgenommen ist bzw. getrocknet wird. Insbesondere wird keine Luft in der Trocknereinheit getrocknet, wenn Luft aus dem Garraum gesaugt und/oder in den Garraum geführt wird.

Dabei umfasst die Aufbereitungseinrichtung wenigstens eine Garraumöffnung. Durch die Garraumöffnung ist die Charge Luft sowohl absaugbar als auch dem Garraum wieder zuführbar. Das ermöglicht eine besonders unaufwendige Ausgestaltung der Lufttrocknung. Durch die gemeinsame Garraumöffnung zum Absaugen und Zurückführen können Bauteile und Bauraum eingespart werden. Dadurch wird eine kostengünstige und kompakte Lufttrocknung erreicht. Zudem ist es für die thermische Isolation des Garraums von Vorteil, wenn eine gemeinsame Garraumöffnung vorgesehen ist. Die Trocknereinheit ist insbesondere über die Garraumöffnung mit dem Garraum strömungsverbunden. Insbesondere ist eine einzige gemeinsame Garraumöffnung vorgesehen, durch welche die Luft absaugbar und wieder in den Garraum zurückführbar ist. Möglich ist aber auch, dass jeweils wenigstens eine Garraumöffnung zum Absaugen und Zurückführen der Charge Luft vorgesehen ist.

Vorzugsweise umfasst die Aufbereitungseinrichtung wenigstens einen Vorlaufkanal, welcher eine Strömungsverbindung von der Garraumöffnung zu der Trocknereinheit bereitstellt. Es ist bevorzugt, dass die Aufbereitungseinrichtung wenigstens einen Rücklaufkanal umfasst, welcher eine Strömungsverbindung von der Trocknereinheit zur Garraumöffnung bereitstellt. Insbesondere strömt die Luft aus dem Garraum über den Vorlaufkanal zu der Trocknereinheit. Insbesondere strömt die getrocknete Luft über den Rücklaufkanal von der Trocknereinheit zur Garraumöffnung und in den Garraum. Möglich ist aber auch, dass die Trocknereinheit über wenigstens einen Strömungskanal an den Garraum angebunden ist, durch welchen die Luft aus dem Garraum sowohl zu der Trocknereinheit hin als auch wieder von der Trocknereinheit in den Garraum zurückführbar ist.

Der Garraumöffnung ist vorzugsweise wenigstens ein Mehrwegeventil zugeordnet. Es ist bevorzugt, dass das Mehrwegeventil in einer Schaltstellung den Vorlaufkanal freigibt und den Rücklaufkanal versperrt. Bevorzugt ist, dass das Mehrwegeventil in einer anderen Schaltstellung den Rücklaufkanal freigibt und den Vorlaufkanal sperrt. Besonders bevorzugt versperrt das Mehrwegeventil in einer weiteren Schaltstellung sowohl den Vorlaufkanal als auch den Rücklaufkanal. Das Mehrwegeventil wird insbesondere in die weitere Schaltstellung gebracht, wenn die Trocknereinheit aktiv ist und die Charge Luft getrocknet wird. Dadurch wird ein unerwünschtes Zurückströmen der zu trocknenden Luft in den Garraum verhindert. Insbesondere ist das Mehrwegeventil zwischen der Schaltstellung und der anderen Schaltstellung und/oder weiteren Schaltstellung umschaltbar und besonders bevorzugt automatisiert umschaltbar.

Das Mehrwegeventil ist beispielsweise als ein Dreiwegeventil ausgebildet. Es ist auch möglich, dass dem Vorlaufkanal und dem Rücklaufkanal jeweils wenigstens ein insbesondere automatisiert schaltbares Ventil zugeordnet ist. Dabei sind die Ventile vorzugsweise derart schaltbar, dass der Vorlaufkanal freigegeben ist, wenn der Rücklaufkanal versperrt ist und umgekehrt. Während eines Trocknungsvorgangs versperren die Ventile insbesondere den Vorlaufkanal und den Rücklaufkanal.

Vorzugsweise ist dem Vorlaufkanal und/oder dem Rücklaufkanal wenigstens eine Gebläseeinrichtung zugeordnet. Es ist möglich, dass wenigstens eine Gebläseeinrichtung der Trocknereinheit vorgeschaltet ist. Dann ist die Gebläseeinrichtung insbesondere dazu geeignet und ausgebildet, die Luft aus dem Garraum zu saugen und in die Trocknereinheit zu blasen. Insbesondere ist wenigstens eine Gebläseeinrichtung der Trocknereinheit nachgeschaltet.

Dann ist die Gebläseeinrichtung dazu geeignet und ausgebildet, die Luft aus der Trocknereinheit zu saugen und in den Garraum zu blasen. Der Trocknereinheit kann wenigstens eine Gebläseeinrichtung vorgeschaltet und wenigstens eine Gebläseeinrichtung nachgeschaltet sein. Möglich ist auch, dass in der Trocknereinheit wenigstens eine Gebläseeinrichtung angeordnet bzw. integriert ist. Möglich ist auch, dass ein Umluftgebläse und/oder ein Heißluftgebläse, welches insbesondere im Garraum angeordnet ist, zur Förderung der Charge Luft ausgebildet ist.

Die Charge Luft umfasst insbesondere eine Menge an Luft, welche im Wesentlichen einer in der Trocknereinheit und dem Vorlaufkanal und dem Rücklaufkanal aufnehmbaren Luftmenge entspricht. Eine solche Bemessung der Charge bietet eine besonders vorteilhafte Lufttrocknung. Diese Angabe bezieht sich insbesondere auf einen gegebenen Druck. Der gegebene Druck kann dem in der Umgebung des Gargeräts herrschenden Druck oder auch einen durch eine Gebläseeinrichtung aufgebauten Überdruck entsprechen. Die Charge kann aber auch eine größere oder geringere Menge an Luft umfassen. Die Charge Luft umfasst insbesondere eine Menge an Luft, welche in einem hinter der Garraumöffnung liegenden geschlossenen Strömungsraum aufnehmbar ist. Möglich ist, dass die Charge Luft eine Menge an Luft umfasst, welche im Wesentlichen nur einer in der Trocknereinheit aufnehmbaren Luftmenge entspricht.

In einer vorteilhaften Ausgestaltung ist dem Garraum wenigstens eine weitere Garraumöffnung zugeordnet. Durch die weitere Garraumöffnung ist dem Garraum mittels wenigstens einer Befeuchtungseinrichtung Feuchte zuführbar. Eine solche Ausgestaltung ermöglicht besonders schmackhafte Garergebnisse, da zum einen die Garraumluft getrocknet werden kann und zum anderen ein Austrocknen des Garguts verhindert wird. Beispielsweise ist die Befeuchtungseinrichtung dazu geeignet und ausgebildet, Wasserdampf zu erzeugen und durch die weitere Garraumöffnung in den Garraum einzubringen. Möglich ist auch, dass die Befeuchtungseinrichtung über die Garraumöffnung mit dem Garraum strömungsverbunden ist, über welche auch die Trocknereinheit angebunden ist. Beispielsweise kann die Befeuchtungseinrichtung an das Mehrwegeventil gekoppelt sein. Das Mehrwegeventil ist dann beispielsweise als ein Vierwegeventil ausgebildet. Es kann auch ein weiteres Ventil für die Anbindung der Befeuchtungseinrichtung vorgesehen sein.

Das Gargerät umfasst vorzugsweise wenigstens eine Klimaeinrichtung zur Anpassung der Garraumfeuchte während eines Garvorgangs auf wenigstens einen Zielwert. Die Klimaeinrichtung ist insbesondere zu geeignet und ausgebildet, mittels der Aufbereitungseinrichtung die Feuchte im Garraum auf wenigstens einen Zielwert zu verringern und/oder zu halten. Vorzugsweise ist die Klimaeinrichtung dazu geeignet und ausgebildet, mittels wenigstens einer Befeuchtungseinrichtung die Feuchte im Garraum auf den Zielwert zu erhöhen. Die Befeuchtungseinrichtung ist insbesondere die zuvor beschriebene Befeuchtungseinrichtung. Mit einer solchen Ausgestaltung lassen sich besonders gute Garergebnisse erzielen, da die für ein Lebensmittel optimale Garraumfeuchte gezielt eingestellt werden kann. Die Klimaeinrichtung kann auch dazu geeignet und ausgebildet sein, eine Trocknungsleistung der Aufbereitungseinrichtung wenigstens zeitweise so zu reduzieren, dass die Garraumfeuchte durch eine von einem Gargut abgegebene Feuchtigkeit auf den Zielwert erhöht wird. Zur Einstellung des Zielwerts ist die Klimaeinrichtung insbesondere mit wenigstens einer Sensoreinrichtung mit wenigstens einem Sensor zur Überwachung der Garraumfeuchte wirkverbunden. Bevorzugt ist wenigstens ein Sensor im Garraum angeordnet, um dort die Feuchte zu erfassen.

Insbesondere ist die Klimaeinrichtung dazu geeignet und ausgebildet, mittels der Aufbereitungseinrichtung und/oder der Befeuchtungseinrichtung die Garraumfeuchte auf wenigstens einen in einem Garprogramm hinterlegten Zielwert einzustellen. Das hat den Vorteil, dass je nach Garprogramm eine bestimmte Garraumfeuchte und zum Beispiel ein zeitgesteuertes Feuchteprofil umgesetzt werden können.

Die Aufbereitungseinrichtung ist insbesondere dazu geeignet und ausgebildet, mittels wenigstens einer Sensoreinrichtung wenigstens eine charakteristische Größe für die Feuchte der zu trocknenden Luft und/oder der getrockneten Luft zu erfassen. Vorzugsweise umfasst die Sensoreinrichtung wenigstens einen Sensor. Der Sensor ist insbesondere als ein Feuchtesensor und/oder als ein Temperatursensor ausgebildet. Die charakteristische Größe für die Feuchte kann zum Beispiel die Luftfeuchte und/oder die Lufttemperatur sein. Beispielsweise ist wenigstens ein Sensor der Trocknereinheit in Strömungsrichtung vorgeschaltet und/oder nachgeschaltet.

Die Aufbereitungseinrichtung ist insbesondere dazu geeignet und ausgebildet, die Trocknereinheit in Abhängigkeit der erfassten Größe anzusteuern und vorzugsweise zu regeln. Insbesondere ist die Aufbereitungseinrichtung dazu geeignet und ausgebildet, die Charge Luft auf eine Zielfeuchte zu trocknen. Die Aufbereitungsseinsrichtung kann auch dazu geeignet und ausgebildet sein, die Feuchte im Garraum auf einen Zielwert zu verringern. Beispielsweise kann die Aufbereitungseinrichtung dazu wiederholt eine Charge Luft trocknen, bis die Feuchte im Garraum den Zielwert erreicht hat.

Insbesondere ist die Aufbereitungseinrichtung dazu geeignet und ausgebildet, in Abhängigkeit der sensorisch erfassten Größe eine Trocknungsleistung der Trocknereinheit zu steuern und insbesondere zu regeln. Insbesondere umfasst die Trocknereinheit wenigstens einen Wärmetauscher, durch welchen die zu trocknende Luft geführt wird. Die Trocknungsleistung kann dann beispielsweise über einen Volumenstrom und/oder Massenstrom und/oder eine Temperatur eines Kühlmediums zum Kühlen der Trocknereinheit einstellbar sein. Die Trocknereinheit kann auch mittels wenigstens einer thermoelektrischen Kühleinrichtung kühlbar sein. Dann ist die Trocknungsleistung insbesondere über eine Leistung der Kühleinrichtung einstellbar. Die Trocknereinheit kann auch mittels einer Kältemaschine und/oder mittels einer Wärmepumpeneinrichtung kühlbar sein. Zur Einstellung der Trocknungsleistung kann dann eine Leistung der Kältemaschine bzw. Wärmepumpeneinrichtung herangezogen werden.

Besonders bevorzugt ist die Aufbereitungseinrichtung dazu geeignet und ausgebildet, die Luft insbesondere mittels der Trocknereinheit auf eine Raumluftfeuchte zu trocknen. Die Raumluftfeuchte entspricht insbesondere einer relativen Luftfeuchtigkeit von weniger als 70 % und vorzugsweise weniger als 60 % und besonders bevorzugt weniger als 50 % insbesondere bei einer Raumtemperatur. Die Raumtemperatur liegt insbesondere bei 20 °C. Es kann auch eine Raumtemperatur von 25 °C angenommen werden. Dadurch herrscht im Garraum eine besonders günstige Atmosphäre zur Zubereitung von Lebensmitteln. Zudem wird auch bei längeren Garvorgängen die Raumluftfeuchte der Küche nicht ungünstig erhöht.

Bevorzugt ist die Aufbereitungseinrichtung, insbesondere die Trocknereinheit, dazu geeignet und ausgebildet, die Luft auf eine Feuchte nicht wesentlich oberhalb einer Raumluftfeuchte zu trocknen. Möglich ist auch, dass die Aufbereitungseinrichtung dazu geeignet und ausgebildet ist, die Luft auf eine Feuchte unterhalb einer Raumluftfeuchte und zum Beispiel auf eine relative Luftfeuchtigkeit von weniger als 50 % bei Raumtemperatur zu trocknen.

Möglich ist aber auch, dass die Aufbereitungseinrichtung dazu geeignet und ausgebildet ist, die Luft auf eine Feuchte oberhalb einer Raumluftfeuchte zu trocknen. Insbesondere ist die Aufbereitungseinrichtung dazu geeignet und ausgebildet, die Luft auf eine Feuchte zu trocknen, welche nicht mehr als 30 Prozentpunkte und vorzugsweise nicht mehr als 20 Prozentpunkte und besonders bevorzugt nicht mehr als zehn Prozentpunkte oberhalb der Raumluftfeuchte liegt. Möglich ist auch eine Trocknung auf höhere Feuchtewerte.

Die Aufbereitungseinrichtung kann dazu geeignet und ausgebildet sein, die Luft zu kühlen und insbesondere auf eine Temperatur unterhalb einer Raumtemperatur zu kühlen. Insbesondere ist die Aufbereitungseinrichtung dazu geeignet und ausgebildet, die Luft unterhalb 20 °C und vorzugsweise unterhalb 15 °C und besonders bevorzugt unterhalb 10 °C zu kühlen. Möglich ist auch, dass die Aufbereitungseinrichtung dazu geeignet ausgebildet ist, die Luft unterhalb 5 °C zu kühlen. Zur Kühlung der Luft wird vorzugsweise die Trocknereinheit wie zuvor beschrieben gekühlt. Insbesondere umfasst die Aufbereitungseinrichtung wenigstens eine Kältemaschine und/oder wenigstens eine Wärmepumpeneinrichtung und/oder wenigstens eine thermoelektrische Kühleinrichtung. Durch eine solche Kühlung kann die Luft auf ein besonders geringes Maß an Feuchte getrocknet werden.

Es ist möglich, dass die Aufbereitungseinrichtung wenigstens eine Auslasseinrichtung mit wenigstens einer Auslassöffnung umfasst, durch welche Luft aus dem Garraum in die Umgebung des Gargeräts abführbar ist. Insbesondere ist die Aufbereitungseinrichtung dazu geeignet und ausgebildet, die Luft über die Auslasseinrichtung nur dann in die Umgebung des Gargeräts abzuführen, wenn die Luft auf eine Raumluftfeuchte und/oder auf wenigstens einen Zielwert für eine Luftfeuchte getrocknet ist. Eine solche Ausgestaltung bietet viele Vorteile, da der Garraum bei Bedarf entsprechend entlüftet werden kann. Ein besonderer Vorteil ist, dass die abgeführte Luft nicht zu einer Zunahme der Raumluftfeuchte in der Umgebung des Gargeräts führt. Dadurch treten keine unerwünschten Feuchte Emissionen aus dem Gargerät auf.

Die Aufbereitungseinrichtung umfasst vorzugsweise wenigstens eine Reinigungseinheit zum Reinigen der Luft aus dem Garraum. Insbesondere ist die Luft chargenweise reinigbar. Dazu ist die Reinigungseinheit insbesondere mit dem Vorlaufkanal und/oder mit dem Rücklaufkanal gekoppelt. Die Reinigungseinheit ist der Trocknereinheit insbesondere vorgeschaltet. Möglich ist aber auch, dass die Reinigungseinheit einer Trocknereinheit nachgeschaltet ist. Dadurch kann die Charge Luft während des Trocknungsvorgangs auch zugleich gereinigt werden. Die Reinigungseinheit kann auch über wenigstens eine separate Strömungsverbindung an den Garraum angebunden sein.

Insbesondere umfasst die Reinigungseinheit wenigstens eine Katalysatoreinrichtung, welche Reaktionen zum Abbau von Fetten und/oder Ölen sowie von geruchsbelästigenden Stoffen des Wrasens katalysiert bzw. unterstützt. Die Reinigungseinheit kann auch wenigstens eine Wascheinrichtung mit wenigstens einer Waschflüssigkeit umfassen. Die Wascheinrichtung ist insbesondere dazu geeignet und ausgebildet, hydrophobe Bestandteile und/oder geruchsintensive Stoffe und/oder Feuchtigkeit des Wrasens mittels der Waschflüssigkeit aufzunehmen und zum Beispiel zu kondensieren. Möglich ist auch, dass die Reinigungseinheit wenigstens eine Plasmaeinrichtung umfasst, welche die Luft durch wenigstens eine gezielte Plasmaentladung reinigt. Die Reinigungseinheit kann die Luft auch mittels UV-Strahlung und/oder durch gezielte Ionisation reinigen.

Die Reinigungseinheit kann auch wenigstens teilweise in der Trocknereinheit sein. Beispielsweise kann in einer Trocknereinheit eine Waschflüssigkeit vorgesehen sein, welche sowohl zum Kondensieren der Feuchte als auch zum Kondensieren bzw. Waschen der hydrophoben Bestandteile des Wrasens ausgebildet ist.

Die Aufbereitungseinrichtung und insbesondere die Trocknereinheit und/oder die Reinigungseinheit umfassen wenigstens einen Sammelbehälter und/oder eine Abführeinrichtung für das Kondensat. Die Abführeinrichtung kann beispielsweise an ein Abwassersystem angeschlossen sein.

Zum Fördern der Umgebungsluft und/oder der Luft aus dem Garraum und/oder der Mischluft kann wenigstens eine Gebläseeinrichtung vorgesehen sein.

Es ist möglich, dass die Trocknereinheit, insbesondere der Wärmetauscher, durch wenigstens einen Kühlluftstrom kühlbar ist. Der Kühlluftstrom wird insbesondere mittels wenigstens einer Gebläseeinrichtung erzeugt. Es ist möglich, dass der Kühlluftstrom auch zur Kühlung wenigstens einer elektronischen Komponente des Gargeräts einsetzbar ist. Die elektronische Komponente kann dabei dem Wärmetauscher in Strömungsrichtung vorgeschaltet und/oder nachgeschaltet sein. Die elektronische Komponente umfasst beispielsweise wenigstens eine Steuereinrichtung und/oder wenigstens eine Leistungselektronik. Dadurch wird für den Wärmetauscher und die elektronische Komponente eine unaufwendige und kostengünstige Kühlung verwirklicht.

Das erfindungsgemäße Verfahren dient zum Betreiben eines Gargeräts mit wenigstens einem beheizbaren und durch wenigstens eine Garraumtür verschließbaren Garraum. Das Gargerät umfasst wenigstens eine mit dem Garraum strömungsverbundene Aufbereitungseinrichtung. Mit der Aufbereitungseinrichtung wird Luft aus dem Garraum wenigstens zeitweise getrocknet. Dabei wird mittels der Aufbereitungseinrichtung wenigstens eine Charge Luft aus dem Garraum gesaugt und in wenigstens eine Trocknereinheit überführt. Die Charge Luft wird mittels der Trocknereinheit getrocknet wird und nach dem Trocknungsvorgang dem Garraum wieder zugeführt.

Das erfindungsgemäße Verfahren bietet ebenfalls viele Vorteile und ermöglicht eine besonders unaufwendige Reduzierung von Feuchte-Emissionen während des Garbetriebs. Das erfindungsgemäße Gargerät ist vorzugsweise dazu geeignet und ausgebildet, nach dem hier vorgestellten Verfahren betrieben zu werden.

Weitere Vorteile und Merkmale der vorliegenden Erfindung ergeben sich aus den Ausführungsbeispielen, welche im Folgenden mit Bezug auf die beiliegenden Figuren erläutert werden.

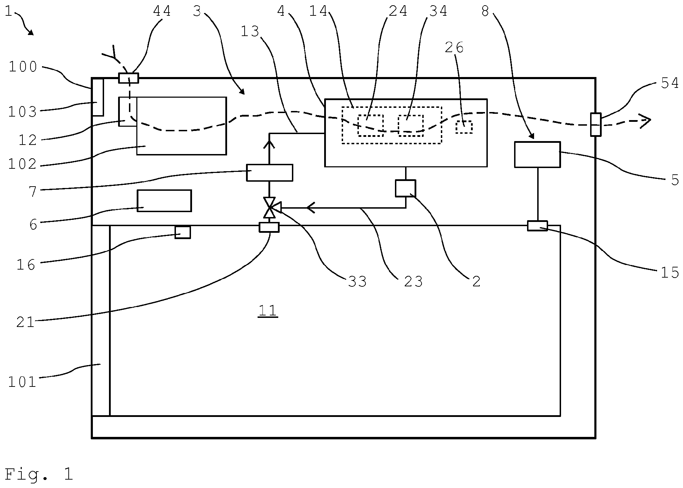

Es zeigt
- Figur 1: eine rein schematische Darstellung eines erfindungsgemäßen Gargeräts in einer geschnittenen Seitenansicht.

Die Figur 1 zeigt ein erfindungsgemäßes Gargerät 1, welches hier als ein Backofen 100 ausgeführt ist. Das Gargerät wird nach dem erfindungsgemäßen Verfahren betrieben. Das Gargerät 1 hat einen beheizbaren Garraum 11, welcher durch eine Garraumtür 101 verschließbar ist. Das Gargerät 1 ist hier als ein Einbaugerät vorgesehen. Es kann auch als ein Standgerät ausgebildet sein.

Für die Beheizung des Garraums 11 stehen verschiedene Heizeinrichtungen zur Verfügung. Möglich ist unter anderem das Beheizen mit einer Ober- und/oder Unterhitze, mit einer Umluftfunktion, mit einer Heißluftheizquelle und/oder mit einer Grillfunktion. Möglich ist auch, dass das Gargerät 1 als ein Kombigerät mit einer Mikrowellenfunktion und/oder einer Dampfgarfunktion ausgebildet ist.

Das Gargerät 1 umfasst hier eine Steuereinrichtung zur Steuerung bzw. Regelung von Gerätefunktionen und Betriebszuständen. Über die Steuereinrichtung sind hier verschiedene Betriebsarten und vorzugsweise verschiedene Garprogramme bzw. Programmbetriebsarten und andere Automatikfunktionen ausführbar.

Zur Bedienung des Gargerätes 1 ist eine Bedieneinrichtung 103 vorgesehen. Beispielsweise können darüber die Betriebsart, die Garraumtemperatur und/oder ein Garprogramm bzw. eine Programmbetriebsart oder andere Automatikfunktion ausgewählt und eingestellt werden. Die Bedieneinrichtung 103 umfasst auch eine Anzeige, über die Benutzerhinweise und z. B. Eingabeaufforderungen angezeigt werden können.

Das Gargerät 1 umfasst eine Aufbereitungseinrichtung 3 zum Trocknen von Luft aus dem Garraum 11. Die Aufbereitungseinrichtung 3 ist mit einer Trocknereinheit 4 ausgestattet, welche die in der Luft enthaltene Feuchtigkeit wenigstens teilweise auskondensiert. Für das Kondensat kann ein Sammelbehälter und/oder eine Abführeinrichtung vorgesehen sein. Die Abführeinrichtung kann beispielsweise an ein Abwassersystem angeschlossen sein.

Die Trocknereinheit 4 ist hier durch eine Garraumöffnung 21 mit dem Garraum 11 strömungsverbunden. Ein Vorlaufkanal 13 führt von der Garraumöffnung 21 zu der Trocknereinheit 4.

Durch den Vorlaufkanal 13 kann Luft aus dem Garraum 11 zu der Trocknereinheit 4 gesaugt und/oder geblasen werden. Ein Rücklaufkanal 23 führt von der Trocknereinheit 4 zu der Garraumöffnung 21. Durch den Rücklaufkanal 23 kann die getrocknete Luft zurück in den Garraum 11 geblasen und/oder gesaugt werden. Die Luft wird also über dieselbe Garraumöffnung 21 aus dem Garraum 11 gesaugt und auch wieder zurückgeführt.

Zum Fördern der Luft ist der Trocknereinheit 4 hier eine Gebläseeinrichtung 2 nachgeschaltet. Der Trocknereinheit 4 kann alternativ oder zusätzlich auch wenigstens eine Gebläseeinrichtung 2 vorgeschaltet sein.

Für einen Trocknungsvorgang saugt die Aufbereitungseinrichtung mittels der Gebläseeinrichtung 2 eine Charge Luft aus dem Garraum 11 und führt sie der Trocknereinheit 4 zu. Die Charge Luft entspricht hier einer Menge an Luft, welche in die Trocknereinheit 4 und insbesondere auch in den Vorlaufkanal 13 und insbesondere auch in den Rücklaufkanal 23 unter den gegebenen Druckbedingungen aufnehmbar ist. Die aufgenommene Charge Luft wird dann mit der Trocknereinheit 4 getrocknet. Nach dem Trocknungsvorgang wird die Charge Luft über die Garraumöffnung 21 wieder in den Garraum 11 zugeführt.

Die Charge Luft kann beispielsweise so stark getrocknet werden, dass die Feuchte der Luft einen vorgesehenen Zielwert erreicht hat. Der Zielwert kann beispielsweise durch ein Garprogramm vorgegeben sein. Es können auch wiederholte chargenweise Trocknungsvorgänge erfolgen, z. B. bis die Feuchte im Garraum auf einen Zielwert reduziert ist.

Um die Feuchte der getrockneten Luft auf den Zielwert zu regeln, ist hier eine Sensoreinrichtung 6 mit einem Sensor 26 vorgesehen. Der Sensor 26 dient hier zur Erfassung der Feuchte der getrockneten Luft und ist in der Trocknereinheit 4 angeordnet. Der Sensor 26 kann beispielsweise auch in dem Rücklaufkanal 23 angeordnet sein.

Der Vorlaufkanal 13 und der Rücklaufkanal 23 sind hier über ein Mehrwegeventil 33 mit der Garraumöffnung 21 bzw. dem Garraum 11 strömungsverbunden. Das Mehrwegeventil 33 kann hier insgesamt drei Schaltstellungen einnehmen. In einer ersten Schaltstellung gibt das Mehrwegeventil 33 den Vorlaufkanal 13 frei und versperrt den Strömungsweg zum Rücklaufkanal 23. In der ersten Schaltstellung wird die Luft aus dem Garraum 11 in die Trocknereinheit 14 eingesaugt.

In einer zweiten Schaltstellung verschließt das Mehrwegeventil 33 sowohl den Vorlaufkanal 13 als auch den Rücklaufkanal 23. Dann ist die Trocknereinheit 4 nicht mehr mit dem Garraum 11 strömungsverbunden. In der zweiten Schaltstellung wird dann die Trocknereinheit 4 aktiv und die Charge Luft wird getrocknet.

Nach dem Trocknungsvorgang und beispielsweise bei Erreichen der gewünschten Zielfeuchte geht das Mehrwegeventil 33 in eine dritte Schaltstellung über. In der dritten Schaltstellung wird der Vorlaufkanal 13 versperrt und der Rücklaufkanal 23 wird freigegeben. Dann kann die Charge Luft mit der Gebläseeinrichtung 2 wieder zurück in den Garraum 11 geblasen werden.

Danach kann sich je nach Bedarf bzw. je nach Garraumfeuchte oder Zielwertvorgabe ein weiterer Trocknungsvorgang anschließen, bei dem erneut eine Charge Luft getrocknet wird.

Die Trocknereinheit 4 umfasst hier einen Wärmetauscher 14 zum Kondensieren der Luftfeuchte. Der Wärmetauscher 14 ist zum Beispiel als ein luftgekühlter Wärmetauscher 14 ausgebildet. Dabei wird der Wärmetauscher 14 durch einen Kühlluftstrom gekühlt, welcher mittels wenigstens einer Gebläseeinrichtung 12 erzeugt wird. Der Kühlluftstrom ist hier durch eine gestrichelte Linie stark schematisch angedeutet.

Die Trocknereinheit 4 kann in einer Ausgestaltung wenigstens eine thermoelektrische Kühleinrichtung 24 umfassen, beispielsweise ein Peltierelement. Die Trocknereinheit 4 kann alternativ oder zusätzlich auch mit einer Wärmepumpeneinrichtung 34 ausgestattet sein. Mit der Kühleinrichtung 24 bzw. der Wärmepumpeneinrichtung 34 können die zu trocknende Luft bzw. der Wärmetauscher 14 entsprechend gekühlt werden. Eine solche Kühlung kann alternativ oder ergänzend zu dem Kühlluftstrom vorgesehen sein. Der Wärmetauscher 14 kann auch mit einer Flüssigkeit kühlbar sein.

Der Kühlluftstrom wird hier über einen Kühllufteinlass 44 in das Gargerät 1 gesaugt. Die eingesaugte Kühlluft wird von der Gebläseeinrichtung 12 entlang einer elektronischen Komponente 102 geblasen, sodass die Komponente 102 durch den Kühlluftstrom ebenfalls gekühlt werden kann. Beispielsweise ist die elektronische Komponente 102 als eine Elektronikbox ausgebildet, in welcher zum Beispiel eine Steuereinrichtung und/oder eine Leistungselektronik angeordnet sind.

Anschließend strömt der Kühlluftstrom entlang des Wärmetauschers 14. Der Kühlluftstrom wird dann über einen Kühlluftauslass 54 wieder aus dem Gargerät 1 abgeführt.

In der hier gezeigten Ausgestaltung ist die elektronische Komponente 102 der Trocknereinheit 4 in Strömungsrichtung vorgeschaltet. Möglich ist aber auch, dass die elektronische Komponente 102 in Strömungsrichtung hinter der Trocknereinheit 4 angeordnet ist. Auch die Gebläseeinrichtung 12 kann an anderen Positionen angeordnet sein. Beispielsweise kann die Gebläseeinrichtung 12 zwischen der Trocknereinheit 4 und dem Kühlluftauslass 54 angeordnet sein, sodass der Kühlluftstrom entlang der Komponente 102 und der Trocknereinheit 4 gesaugt wird. Es können auch zwei oder mehr Gebläseeinrichtungen 12 für den Kühlluftstrom vorgesehen sein.

Das Gargerät 1 kann mit einer Klimaeinrichtung 8 zur Anpassung der Garraumfeuchte während eines Garvorgangs auf wenigstens einen Zielwert ausgestattet sein. Die Klimaeinrichtung 8 umfasst hier eine Befeuchtungseinrichtung 5, welche beispielsweise Wasserdampf über eine weitere Garraumöffnung 15 in den Garraum 11 einbringen kann. So kann die Feuchte im Garraum 11 gezielt angehoben werden. Zur Erzeugung des Wasserdampfs kann das Kondensat aus der Trocknereinheit 4 verwendet werden.

Die Klimaeinrichtung 8 ist hier zudem mit der Sensoreinrichtung 6 wirkverbunden. Die Sensoreinrichtung 6 umfasst dazu einen Sensor 16, welcher im Garraum 11 angeordnet ist und zur Erfassung der Garraumfeuchte dient. Die Klimaeinrichtung 8 kann mittels des Sensors 16 und der Befeuchtungseinrichtung 5 die Feuchte im Garraum 11 auf einen Zielwert erhöhen. Der Zielwert ist beispielsweise in einem Garprogramm hinterlegt.

Zudem ist die Klimaeinrichtung 8 hier auch mit der Aufbereitungseinrichtung 3 wirkverbunden. Dabei kann die Klimaeinrichtung 8 die Aufbereitungseinrichtung 3 so ansteuern, dass die Garraumfeuchte auf einen Zielwert verringert wird. Beispielsweise wird wiederholt eine Charge Luft aus dem Garraum 11 entnommenen, getrocknet und wieder zurückgeführt, bis die Garraumfeuchte den Zielwert erreicht hat.

Es kann auch vorgesehen sein, dass zur Einstellung einer geforderten Garraumfeuchte eine Trocknungsleistung der Trocknereinheit 4 durch die Klimaeinrichtung 8 eingestellt wird. Beispielsweise wird dazu die Leistung der thermoelektrischen Kühleinrichtung 24 oder der Wärmepumpeneinrichtung 34 eingestellt.

Es kann aber auch vorgesehen sein, dass die Trocknereinheit 4 eine voreingestellte Trocknungsleistung erbringt. Dann erfolgt die Einstellung der Garraumfeuchte auf den Zielwert insbesondere durch ein wiederholtes chargenweises Trocknen. Die Einstellung der geforderten Garraumfeuchte kann auch durch eine Kombination aus einer Einstellung der Trocknungsleistung und einer wiederholten chargenweisen Lufttrocknung erfolgen.

Wahlweise kann die Aufbereitungseinrichtung 3 auch mit einer Reinigungseinheit 7 ausgestattet sein. Die Reinigungseinheit 7 umfasst zum Beispiel eine Katalysatoreinrichtung, welche Reaktionen zum Abbau von Fetten und/oder Ölen sowie von geruchsbelästigenden Stoffen des Wrasens katalysiert bzw. unterstützt. Die Reinigungseinheit 7 ist hier in Strömungsrichtung vor der Trocknereinheit 4 angeordnet. So werden schwer zu entfernende Verschmutzungen stromabwärts der Reinigungseinheit 7 wirkungsvoll vermieden. Die Reinigungseinheit 7 kann aber auch an anderen Positionen entlang der entsprechenden Strömungswege vorgesehen sein.

### Bezugszeichenliste

- 1: Gargerät
- 2: Gebläseeinrichtung
- 3: Aufbereitungseinrichtung
- 4: Trocknereinheit
- 5: Befeuchtungseinrichtung
- 6: Sensoreinrichtung
- 7: Reinigungseinheit
- 8: Klimaeinrichtung
- 11: Garraum
- 12: Gebläseeinrichtung
- 13: Vorlaufkanal
- 14: Wärmetauscher
- 15: Garraumöffnung
- 16: Sensor
- 21: Garraumöffnung
- 23: Rücklaufkanal
- 24: Kühleinrichtung
- 26: Sensor
- 33: Mehrwegeventil
- 34: Wärmepumpeneinrichtung
- 44: Kühllufteinlass
- 54: Kühlluftauslass
- 100: Backofen
- 101: Tür
- 102: Komponente
- 103: Bedieneinrichtung

## Patentansprüche

1. Gargerät (1) mit wenigstens einem beheizbaren und durch wenigstens eine Garraumtür (101) verschließbaren Garraum (11) und mit wenigstens einer mit dem Garraum (11) strömungsverbundenen Aufbereitungseinrichtung (3) zum Trocknen von Luft aus dem Garraum (11), wobei die Aufbereitungseinrichtung (3) mit wenigstens einer Trocknereinheit (4) ausgestattet ist und dazu geeignet und ausgebildet ist, wenigstens eine Charge Luft aus dem Garraum (11) zu saugen und in die Trocknereinheit (4) zu überführen und die Charge Luft mittels der Trocknereinheit (4) zu trocknen und nach dem Trocknungsvorgang dem Garraum (11) wieder zuzuführen,
**dadurch gekennzeichnet,**
**dass** die Aufbereitungseinrichtung (3) wenigstens eine Garraumöffnung (21) umfasst, durch welche die Charge Luft sowohl absaugbar als auch dem Garraum (11) wieder zuführbar ist.

2. Gargerät (1) nach dem vorhergehenden Anspruch, **dadurch gekennzeichnet, dass** die Aufbereitungseinrichtung (3) wenigstens einen Vorlaufkanal (13) umfasst, welcher eine Strömungsverbindung von der Garraumöffnung (21) zu der Trocknereinheit (4) bereitstellt, und dass die Aufbereitungseinrichtung (3) wenigstens einen Rücklaufkanal (23) umfasst, welcher eine Strömungsverbindung von der Trocknereinheit (4) zur Garraumöffnung (21) und bereitstellt.

3. Gargerät (1) nach dem vorhergehenden Anspruch, **dadurch gekennzeichnet, dass** der Garraumöffnung (21) wenigstens ein Mehrwegeventil (33) zugeordnet ist und dass das Mehrwegeventil (33) in einer Schaltstellung den Vorlaufkanal (13) freigibt und den Rücklaufkanal (23) versperrt und in einer anderen Schaltstellung den Rücklaufkanal (23) freigibt und den Vorlaufkanal (13) versperrt.

4. Gargerät (1) nach einem der beiden vorhergehenden Ansprüche, **dadurch gekennzeichnet, dass** dem Vorlaufkanal (13) und/oder dem Rücklaufkanal (23) wenigstens eine Gebläseeinrichtung (2) zugeordnet ist.

5. Gargerät (1) nach einem der drei vorhergehenden Ansprüche, **dadurch gekennzeichnet, dass** die Charge Luft eine Menge an Luft umfasst, welche im Wesentlichen einer in der Trocknereinheit (4) und dem Vorlaufkanal (13) und dem Rücklaufkanal (23) aufnehmbaren Luftmenge entspricht.

6. Gargerät (1) nach einem der vorhergehenden Ansprüche, **dadurch gekennzeichnet, dass** dem Garraum (11) wenigstens eine weitere Garraumöffnung (15) zugeordnet ist, durch welche dem Garraum (11) mittels wenigstens einer Befeuchtungseinrichtung (5) Feuchte zuführbar ist.

7. Gargerät (1) nach einem der vorhergehenden Ansprüche, umfassend wenigstens eine Klimaeinrichtung (8) zur Anpassung der Garraumfeuchte während eines Garvorgangs auf wenigstens einen Zielwert, wobei die Klimaeinrichtung (8) dazu geeignet und ausgebildet ist, mittels der Aufbereitungseinrichtung (3) die Feuchte im Garraum (11) auf wenigstens einen Zielwert zu verringern und/oder zu halten und mittels wenigstens einer Befeuchtungseinrichtung (5) die Feuchte im Garraum (11) auf den Zielwert zu erhöhen.

8. Gargerät (1) nach einem der vorhergehenden Ansprüche, **dadurch gekennzeichnet, dass** die Aufbereitungseinrichtung (3) dazu geeignet und ausgebildet ist, mittels wenigstens einer Sensoreinrichtung (6) wenigstens eine charakteristische Größe für die Feuchte der zu trocknenden Luft und/oder der getrockneten Luft zu erfassen und die Trocknereinheit (4) in Abhängigkeit der erfassten Größe anzusteuern.

9. Gargerät (1) nach einem der vorhergehenden Ansprüche, **dadurch gekennzeichnet, dass** die Aufbereitungseinrichtung (3) dazu geeignet und ausgebildet ist, die Luft auf eine Raumluftfeuchte zu trocknen.

10. Verfahren zum Betreiben eines Gargeräts (1) nach Anspruch 1, mit wenigstens einem beheizbaren und durch wenigstens eine Garraumtür (101) verschließbaren Garraum (11) und mit wenigstens einer mit dem Garraum (11) strömungsverbundenen Aufbereitungseinrichtung (3), mit welcher wenigstens zeitweise Luft aus dem Garraum (11) getrocknet wird,
**dadurch gekennzeichnet,**
**dass** mittels der Aufbereitungseinrichtung (3) wenigstens eine Charge Luft aus dem Garraum (11) gesaugt wird und in wenigstens eine Trocknereinheit (4) überführt wird und dass die Charge Luft mittels der Trocknereinheit (4) getrocknet wird und nach dem Trocknungsvorgang dem Garraum (11) wieder zugeführt wird.

## Claims

1. Cooking appliance (1) comprising at least one heatable cooking chamber (11) which can be closed by at least one cooking chamber door (101), and comprising at least one processing device (3) which is fluidically connected to the cooking chamber (11), for drying air from the cooking chamber (11), wherein the processing device (3) is equipped with at least one drying unit (4) and is suitable and designed for sucking at least one batch of air from the cooking chamber (11) and transferring it to the dryer unit (4), drying said batch of air by means of the dryer unit (4) and feeding it back to the cooking chamber (11) after the drying process, **characterised in that** the processing device (3) comprises at least one cooking chamber opening (21) through which the batch of air can both be extracted and fed back to the cooking chamber (11).

2. Cooking appliance (1) according to the preceding claim, **characterised in that** the processing device (3) comprises at least one flow channel (13) which provides a fluid connection from the cooking chamber opening (21) to the drying unit (4), and **in that** the processing device (3) comprises at least one return channel (23) which provides a fluid connection from the drying unit (4) to the cooking chamber opening (21).

3. Cooking appliance (1) according to the preceding claim, **characterised in that** at least one multi-way valve (33) is associated with the cooking chamber opening (21), and **in that** the multi-way valve (33) in one switching position releases the flow channel (13) and blocks the return channel (23), and in another switching position releases the return channel (23) and blocks the flow channel (13).

4. Cooking appliance (1) according to either of the two preceding claims, **characterised in that** at least one fan device (2) is associated with the flow channel (13) and/or the return channel (23).

5. Cooking appliance (1) according to any of the three preceding claims, **characterised in that** the batch of air comprises an amount of air which substantially corresponds to an amount of air that can be received in the drying unit (4) and the flow channel (13) and the return channel (23).

6. Cooking appliance (1) according to any of the preceding claims, **characterised in that** at least one further cooking chamber opening (15) is assigned to the cooking chamber (11), through which opening moisture can be supplied to the cooking chamber (11) by means of at least one humidification device (5).

7. Cooking appliance (1) according to any of the preceding claims, comprising at least one air conditioning device (8) for adjusting the cooking chamber moisture to at least one target value during a cooking process, wherein the air conditioning device (8) is suitable and designed for reducing and/or maintaining the moisture in the cooking chamber (11) to at least one target value by means of the processing device (3), and increasing the moisture in the cooking chamber (11) to the target value by means of at least one humidification device (5).

8. Cooking appliance (1) according to any of the preceding claims, **characterised in that** the processing device (3) is suitable and designed for detecting at least one characteristic variable for the moisture of the air which is to be dried and/or of the dried air by means of at least one sensor device (6), and to control the drying unit (4) depending on the detected variable.

9. Cooking appliance (1) according to any of the preceding claims, **characterised in that** the processing device (3) is suitable and designed for drying the air to a room air moisture.

10. Method for operating a cooking appliance (1) according to claim 1, comprising at least one heatable cooking chamber (11) which can be closed by means of at least one cooking chamber door (101), and comprising at least one processing device (3) which is fluidically connected to the cooking chamber (11) and by means of which air from the cooking chamber (11) is at least intermittently dried, **characterised in that** at least one batch of air is sucked out of the cooking chamber (11) and transferred to at least one dryer unit (4) by means of the processing device (3), and **in that** the batch of air is dried by means of the drying unit (4) and is returned to the cooking chamber (11) after the drying process.

## Revendications

1. Appareil de cuisson (1) comportant au moins une chambre de cuisson (11) pouvant être chauffée et pouvant être fermée par au moins une porte de chambre de cuisson (101), et comportant au moins un dispositif de préparation (3) relié en écoulement à la chambre de cuisson (11) pour sécher l'air provenant de la chambre de cuisson (11), le dispositif de préparation (3) étant équipé d'au moins une unité de séchage (4) et est adapté et conçu pour aspirer au moins une charge d'air de la chambre de cuisson (11) et pour la transférer dans l'unité de séchage (4), et pour sécher la charge d'air au moyen de l'unité de séchage (4) et pour la renvoyer dans la chambre de cuisson (11) après le processus de séchage, **caractérisé en ce que** le dispositif de préparation (3) comprend au moins une ouverture de chambre de cuisson (21) par laquelle la charge d'air peut être à la fois aspiré et renvoyé dans la chambre de cuisson (11).

2. Appareil de cuisson (1) selon la revendication précédente, **caractérisé en ce que** le dispositif de préparation (3) comprend au moins un conduit d'écoulement (13) qui fournit une liaison d'écoulement allant de l'ouverture de la chambre de cuisson (21) à l'unité de séchage (4), et **en ce que** le dispositif de préparation (3) comprend au moins un conduit de retour (23) qui fournit une liaison d'écoulement allant de l'unité de séchage (4) à l'ouverture de chambre de cuisson (21).

3. Appareil de cuisson (1) selon la revendication précédente, **caractérisé en ce qu'**au moins une soupape à plusieurs voies (33) est associée à l'ouverture de chambre de cuisson (21), et **en ce que** la soupape à plusieurs voies (33), dans une position de commutation, libère le conduit d'écoulement (13) et bloque le conduit de retour (23) et, dans une autre position de commutation, libère le conduit de retour (23) et bloque le conduit d'écoulement (13).

4. Appareil de cuisson (1) selon l'une des deux revendications précédentes, **caractérisé en ce qu'**au moins un dispositif de ventilation (2) est associé au conduit d'écoulement (13) et/ou au conduit de retour (23).

5. Appareil de cuisson (1) selon l'une des trois revendications précédentes, **caractérisé en ce que** la charge d'air comprend une quantité d'air qui correspond sensiblement à une quantité d'air pouvant être absorbée dans l'unité de séchage (4), le conduit d'écoulement (13) et le conduit de retour (23).

6. Appareil de cuisson (1) selon l'une des revendications précédentes, **caractérisé en ce qu'**à la chambre de cuisson (11) est associée au moins une autre ouverture de chambre de cuisson (15) par laquelle de l'humidité peut être amenée à la chambre de cuisson (11) au moyen d'au moins un dispositif d'humidification (5).

7. Appareil de cuisson (1) selon l'une des revendications précédentes, comprenant au moins un dispositif de préparation (8) permettant d'adapter l'humidité de la chambre de cuisson pendant un processus de cuisson à au moins une valeur cible, le dispositif de préparation (8) étant adapté et conçu pour réduire et/ou pour maintenir l'humidité dans la chambre de cuisson (11) à au moins une valeur cible au moyen du dispositif de préparation (3), et pour augmenter l'humidité dans la chambre de cuisson (11) pour atteindre la valeur cible, au moyen d'au moins un dispositif d'humidification (5).

8. Appareil de cuisson (1) selon l'une des revendications précédentes, **caractérisé en ce que** le dispositif de préparation (3) est adapté et conçu pour détecter au moins une grandeur caractéristique pour l'humidité de l'air à sécher et/ou de l'air séché au moyen d'au moins un dispositif capteur (6), et pour commander l'unité de séchage (4) en fonction de la grandeur détectée.

9. Appareil de cuisson (1) selon l'une des revendications précédentes, **caractérisé en ce que** le dispositif de préparation (3) est adapté et conçu pour sécher l'air jusqu'à ce qu'il atteigne un niveau d'humidité ambiante.

10. Procédé permettant de faire fonctionner un appareil de cuisson (1) selon la revendication 1, comportant au moins une chambre de cuisson (11) pouvant être chauffée et pouvant être fermée par au moins une porte de chambre de cuisson (101), et comportant au moins un dispositif de préparation (3) qui est en liaison d'écoulement avec la chambre de cuisson (11) et avec lequel l'air provenant de la chambre de cuisson (11) est séché au moins temporairement, **caractérisé en ce qu'**au moins une charge d'air est aspirée de la chambre de cuisson (11) au moyen du dispositif de préparation (3) et transférée à au moins une unité de séchage (4), et **en ce que** la charge d'air est séchée au moyen de l'unité de séchage (4) et est renvoyée dans la chambre de cuisson (11) après le processus de séchage.
